# EUROPEAN PATENT APPLICATION

(11) **EP 2 677 584 A1**
(43) Date of publication of application: **25.12.2013**
(21) Application number: 12746747.0
(22) Date of filing: 17.02.2012
(51) Int. Cl.: H01M 8/04, H01M 8/12

(54) **FUEL CELL MODULE**

(30) Priority: 17.02.2011 JP 2011032142
(71) Applicant: JX Nippon Oil & Energy Corporation, Chiyoda-ku Tokyo 100-8162 (JP)
(72) Inventor: YAMAMOTO Satoru, Tokyo 100-8162 (JP); MIZUNO Yasushi, Tokyo 100-8162 (JP)
(74) Representative: Grünecker, Kinkeldey, Stockmair & Schwanhäusser
(86) International application number: PCT/JP2012/053869
(87) International publication number: WO 2012/111822

(57) **Abstract**

A fuel cell module includes a power generating unit including a cell stack having connected therein a plurality of cells that generate power by using a hydrogen-containing gas and an oxidant, and a housing accommodating the power generating unit. The housing includes an accommodation chamber having a power generating unit arrangement surface where the power generating unit is disposed and a first side wall section and accommodating the power generating unit, and an oxidant flow channel that is formed on the outside of the accommodation chamber, with the first side wall section being interposed therebetween, and allows the oxidant to pass therethrough. A through hole is formed that connects the accommodation chamber with the oxidant flow channel and serves to supply the oxidant to the cell stack.

## Description

### Technical Field

The present invention relates to a fuel cell module.

### Background Art

Fuel cell modules configured by accommodating a reformer and a cell stack in a fuel cell housing described in Patent Literature 1 and Patent Literature 2 have been known as the conventional fuel cell modules. Such a fuel cell housing is provided with an accommodation chamber accommodating the reformer and the cell stack, an exhaust gas flow channel formed on the outer side of the accommodation chamber, an oxidant flow channel formed on the outer side of the exhaust gas flow channel, and an oxidant supply component extending from the oxidant flow channel on the upper side downward toward the accommodation chamber. The exhaust gas flow channel has a portion in which the exhaust gas generated from a combustion section located in the upper end portion of the cell stack is allowed to flow down at a side of the accommodation chamber. Further, the oxidant supply component is disposed such as to enter the gap between the cell stacks arranged side by side in the direction parallel to the power generating unit arrangement surface where a power generating unit including the cell stack is disposed and perpendicular to the stacking direction of the cells, and the oxidant supply component has a through hole in the distal end section such that the oxidant is supplied from the gap to each cell stack.

### Citation List

### Patent Literature

Patent Literature 1: Japanese Unexamined Patent Application Publication No. 2010-044990
Patent Literature 2: Japanese Unexamined Patent Application Publication No. 2010-238430

### Summary of Invention

### Technical Problem

However, the conventional fuel cell module requires an oxidant supply component for supplying the oxidant to the cell stacks. Therefore, a large opening for disposing the oxidant supply component should be formed in the upper wall section disposed above the accommodation chamber. Further, a flange plate or a sealing material is necessary to ensure air-tightness between such an opening and the oxidant supply component and for preventing the oxidant from being supplied from a zone outside the through hole in the distal end section which serves to supply the oxidant. The resultant problem is that the production cost of the fuel cell module and the material cost increase. Accordingly, a fuel cell module is needed that makes it possible to simplify the structure and reduce cost.

The present invention has been created to resolve such a problem and an objective of the present invention is to provide a fuel cell module that can simplify the structure and easily reduce the cost.

### Solution to Problem

A fuel cell module according to an aspect of the present invention includes a power generating unit including a cell stack having connected therein a plurality of cells that generate power by using a hydrogen-containing gas and an oxidant, and a housing accommodating the power generating unit, wherein the housing includes an accommodation chamber having a power generating unit arrangement surface and a first side wall section and accommodating the power generating unit, and an oxidant flow channel that is formed on the outside of the accommodation chamber, with the first side wall section being interposed therebetween, and allows the oxidant to pass therethrough, and a through hole is formed that connects the accommodation chamber with the oxidant flow channel and serves to supply the oxidant to the cell stack.

In the fuel cell module according to the aspect of the present invention, a through hole is formed that connects the accommodation chamber with the oxidant flow channel and serves to supply the oxidant to the cell stack. Since the oxidant flow channel is disposed outside of the accommodation chamber, the configuration is obtained such that when the oxidant is supplied to the cell stack, the oxidant flows from the outside inward of the housing. As a result, the oxidant supply component that is inserted in the gap between a pair of cell stacks in the conventional fuel cell module is not required. Therefore, the opening for inserting the oxidant supply component is not required in the upper wall section that is disposed above the accommodation chamber, and no parts or operations are needed to ensure air-tightness. Thus, the number of parts can be decreased and the cost can be reduced. The cost can be also reduced because no operation is required to insert the oxidant supply component and ensure the air-tightness thereof. It follows from the above that the structure of the fuel cell module can be simplified and the cost thereof can be easily reduced.

### Advantageous Effects of Invention

In accordance with the present invention, the structure of the fuel cell module can be simplified and the cost thereof is easily reduced.

### Brief Description of Drawings

Fig. 1 is a schematic configuration diagram of the fuel cell module according to an embodiment of the present invention.
Fig. 2 is a cross-sectional view taken along the II-II line in Fig. 1.
Fig. 3 is a partially cut-out perspective view of the fuel cell module according to the present embodiment.
Fig. 4 shows the configuration of a flow channel forming section of a variation example.
Fig. 5 is a schematic configuration drawing of the fuel cell module of a variation example.
Fig. 6 is a cross-sectional view taken along the VI-VI line in Fig. 5.
Fig. 7 is a partially cut-out perspective view of the fuel cell module shown in Fig. 5.
Fig. 8 is a schematic configuration drawing of the fuel cell module of a variation example.
Fig. 9 is a cross-sectional view taken along the IX-IX line in Fig. 8.
Fig. 10 is a schematic configuration drawing of the fuel cell module of a variation example.

### Description of Embodiments

The preferred embodiments of the present invention will be explained hereinbelow in greater detail with reference to the appended drawings. In the drawings, like or corresponding components are assigned with like reference numerals and the redundant explanation thereof is herein omitted.

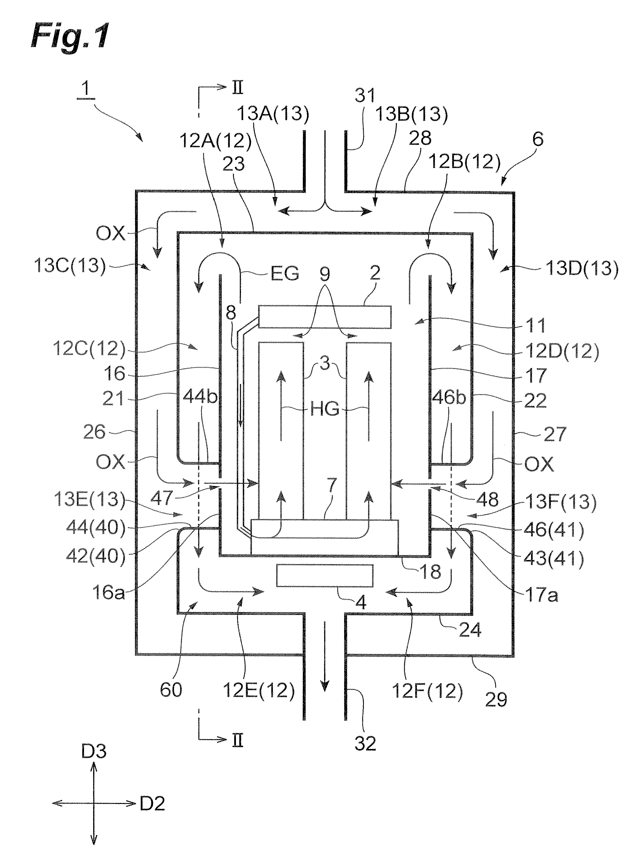

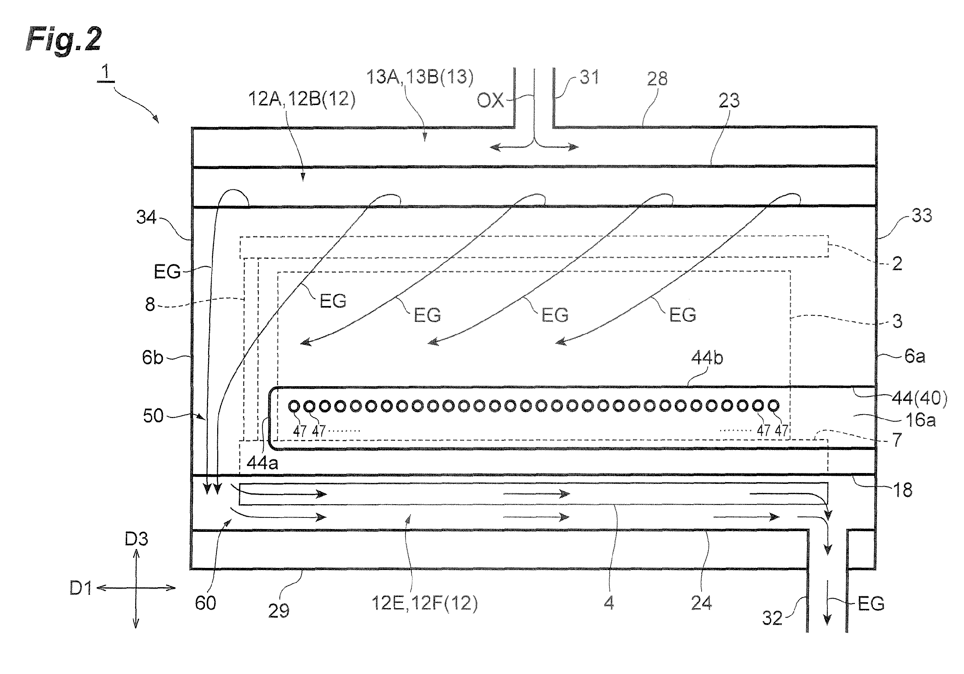

As shown in Figs. 1 and 2, a fuel cell module 1 includes a reformer 2 that uses a hydrogen-containing fuel to generate a hydrogen-containing gas HG, cell stacks 3 that use the hydrogen-containing gas HG and an oxidant OX to generate power, a water vaporizing unit 4 that generates steam to be supplied to the reformer 2 by vaporizing water, and a housing 6 accommodating the reformer 2, cell stacks 3, and water vaporizing unit 4. A housing accommodating an auxiliary device such as a pump and a control device is provided below the fuel cell module 1 (this housing is not shown in Figs. 1 and 2).

For example, a hydrocarbon fuel is used as the hydrogen-containing fuel. A compound including carbon and hydrogen in a molecule (may also include other elements such as oxygen), or a mixture of such compounds is used as the hydrocarbon fuel. Examples of the hydrocarbon fuels include hydrocarbons, alcohols, ethers, and biofuels. The conventional fuels derived from fossil fuels such as petroleum and coal, the fuels derived from synthetic fuels such as synthetic gases, and fuels derived from biomasses can be used as appropriate. Specific examples of hydrocarbons include methane, ethane, propane, butane, natural gas, LPG (liquefied petroleum gas), municipal gas, town gas, gasoline, naphtha, kerosene, and gas oil. Examples of alcohols include methanol and ethanol. Dimethyl ether is an example of ethers. Examples of biofuels include biogas, bioethanol, biodiesel, and biojet.

Examples of the oxidant include air, pure oxygen gas (may include impurities that are difficult to remove by the usual removal methods), and oxygen-rich air.

The reformer 2 generates a reformed gas as a hydrogen-containing gas HG by using the supplied hydrogen-containing fuel. The reformer 2 reforms the hydrogen-containing fuel and generates the reformed gas as the hydrogen-containing gas HG by a reforming reaction using a reforming catalyst. A reforming method in the reformer 2 is not particularly limited, and steam reformer partial oxidation reforming, auto thermal reforming, or other reforming method can be used. The reformer 2 is disposed above the cell stack 3 so that the reformer could be heated by the below-described combustion heat. Thus, the off-gas (unreacted reformed gas) of the hydrogen-containing gas HG introduced to the anode electrode side of the cell stack 3 is burned together with the unreacted oxygen (unreacted oxidant gas) of the oxidant, such as air, introduced to an cathode electrode such as an air electrode, and the reformer 2 is heated by the combustion heat. The reformer 2 supplies the hydrogen-containing gas HG to the anode electrodes of the cell stack 3.

The cell stack 3 includes a stack of a plurality of cells called SOFC (Solid Oxide Fuel Cells). Each cell is constituted by disposing an electrolyte, which is a solid oxide, between the anode electrode and the cathode electrode. The electrolyte is constituted, for example, by an yttria-stabilized zirconia (YSZ) and conducts oxide ions under a high temperature. The anode electrode is constituted, for example, by a mixture of nickel and YSZ, induces a reaction between the oxide ions and hydrogen in the hydrogen-containing gas HG and generates electrons and water. The cathode electrode is constituted, for example, by a lanthanum strontium manganite, induces a reaction between oxygen contained in the oxidant OX and the electrons and generates oxide ions. In the present embodiment, two cell stacks 3 are disposed side by side on the upper surface of a base 7 so as to face each other in the direction parallel to the power generating unit arrangement surface where a power generating unit including the cell stacks 3 is disposed and perpendicular to the stacking direction of the cells. However, only one cell stack 3 may be disposed. Where two cell stacks 3 are disposed, the two cell stacks 3 constitute the power generating unit of the fuel cell module 1. Where one cell stack 3 is used, this one cell stack 3 constitutes the power generating unit of the fuel cell module 1, and where three or more cell stacks 3 are used, those three or more cell stacks 3 constitute the power generating unit of the fuel cell module 1. Since the power generating unit is disposed on a first bottom wall section 18, with the base 7 being interposed therebetween, in the present embodiment, the first bottom wall section 18 corresponds to the power generating unit arrangement surface where the power generating unit is disposed. In the cell stack 3, a plurality of cells may be connected, the cell shape is not particularly limited, and any shape that does not enable stacking may be used. In the present embodiment, the cell stack 3 which is the stack of cells is explained by way of example, and the "cell connection direction" is called a "stacking direction" in the explanation below.

The base 7 and the reformer 2 are connected by a pipe 8. The hydrogen-containing gas HG supplied from the reformer 2 is supplied to each cell of the cell stacks 3 through the base 7. The hydrogen-containing gas HG and the oxidant OX that have not reacted in the cell stacks 3 are burned in a combustion section 9 above the cell stacks 3. The reformer 2 is heated and exhaust gas EG is generated by the combustion of the off-gas in the combustion section 9.

The water vaporizing unit 4 heats and vaporizes the supplied water and generates steam supplied to the reformer 2. The steam generated in the water vaporizing unit 4 is supplied to the reformer 2, for example, by using a pipe (not shown in the figure) connecting the water vaporizing unit 4 with the reformer 2 through the first bottom wall section 18. The heating of water in the water vaporizing unit 4 may be performed, by using, for example, the heat generated inside the fuel cell module 1 by recovering the heat of the reformer 2, the heat of the combustion section 9, or the heat of the exhaust gas EG. In the present embodiment, the water vaporizing unit 4 is disposed in an exhaust gas flow channel in a bottom section and configured to recover the heat of the exhaust gas EG.

The housing 6 is a metallic box in the form of a rectangular parallelepiped that includes an inner space for accommodating the reformer 2, the cell stacks 3, and the water vaporizing unit 4. The housing 6 includes an accommodation chamber 11 accommodating the cell stacks 3, an exhaust gas flow channel 12 that is formed outside of the accommodation chamber 11 and allows to pass therethrough the exhaust gas EG generated by combustion of the off-gas from the cell stacks 3, an oxidant flow channel 13 that allows the oxidant OX to pass therethrough, and wall sections forming the accommodation chamber 11, the exhaust gas flow channel 12, and the oxidant flow channel 13. A heat-receiving element accommodation chamber 60 having disposed therein the water vaporizing unit 4, which is a heat-receiving element, is formed below the accommodation chamber 11. In the explanation below, the direction along the stacking direction of the cells in the cell stacks 3 is taken as a "longitudinal direction D1" of the housing 6, the direction orthogonal to the stacking direction of the cells in the horizontal direction (direction parallel to the power generating unit arrangement surface where the power generating unit including the cell stacks 3 is disposed) is taken as a "width direction D2" of the housing 6, and a vertical direction is taken as a "vertical direction D3" of the housing 6.

The accommodation chamber 11 is formed on the inside of first side wall sections 16, 17 facing each other in the width direction D2 and the first bottom wall section 18 connected to the lower ends of the first side wall sections 16, 17. The base 7 is disposed on the first bottom wall section 18 in the accommodation chamber 11. A thermal insulator may be disposed between the first bottom wall section 18 and the base 7. The upper end portion of the accommodation chamber 11 is open to allow the exhaust gas EG generated in the combustion section 9 to pass therethrough. The heat-receiving element accommodation chamber 60 is formed on the inside of the first bottom wall section 18, a second bottom wall section 24, and second side wall sections 21, 22.

The exhaust gas flow channel 12 is formed by second side wall sections 21, 22 disposed on the outside of the first side wall sections 16, 17 in the width direction D2, a first upper wall section 23 disposed above the upper end portions of the first side wall sections 16, 17, and a second bottom wall section 24 disposed below the first bottom wall section 18.

The first upper wall section 23 is connected to the upper end portions of the second side wall sections 21, 22, and the second bottom wall section 24 is connected to the lower end portions of the second side wall sections 21, 22. The second side wall sections 21, 22 are disposed such as to face the first side wall sections 16, 17 at a distance therefrom. The first upper wall section 23 is separated from the upper end portion of the accommodation chamber 11 and disposed so as to face an opening portion formed in the upper end portion of the accommodation chamber 11. The second bottom wall section 24 is disposed such as to face the first bottom wall section 18 at a distance therefrom.

The exhaust gas flow channel 12 includes exhaust gas flow channels 12A, 12B formed between an opening on the upper side of the accommodation chamber 11 and the first upper wall section 23, exhaust gas flow channels 12C, 12D formed between the second side wall sections 21, 22 and the first side wall sections 16, 17, and exhaust gas flow channels 12E, 12F formed inside the heat-receiving element accommodation chamber 60 and formed between the second bottom wall section 24 and the first bottom wall section 18. The exhaust gas flow channels 12A, 12B guide the exhaust gas EG from the combustion section 9 to the exhaust gas flow channels 12C, 12D. The exhaust gas flow channels 12C, 12D allow the exhaust gas EG to pass through downward and supply the heat of the exhaust gas EG to the oxidant OX flowing in oxidant flow channels 13C, 13D on the outer side. The exhaust gas flow channels 12E, 12F allow the exhaust gas EG to pass through in the horizontal direction toward an exhaust pipe 32 (direction parallel to the power generating unit arrangement surface where the power generating unit including the cell stacks 3 is disposed) and supplies the heat of the exhaust gas EG to the water vaporizing unit 4.

The oxidant flow channel 13 is formed by third side wall sections 26, 27 disposed on the outside of the second side wall sections 21, 22 in the width direction D2, a second upper wall section 28 disposed above the first upper wall section 23, and a third bottom wall section 29 disposed below the second bottom wall section 24.

The second upper wall section 28 is connected to the upper end portions of the third side wall sections 26, 27, and the third bottom wall section 29 is connected to the lower ends of the third side wall sections 26, 27. The third side wall sections 26, 27 are disposed such as to face the second side wall sections 21, 22 at a distance therefrom. The second upper wall section 28 is disposed such as to face the first upper wall section 23 at a distance therefrom. The third bottom wall section 29 is disposed such as to face the second bottom wall section 24 at a distance therefrom.

The oxidant flow channel 13 includes oxidant flow channels 13A, 13B formed between the second upper wall section 28 and the first upper wall section 23, oxidant flow channels 13C, 13D formed between the third side wall sections 26, 27 and the second side wall sections 21, 22, and oxidant flow channels 13E, 13F (described hereinbelow in greater detail) that extend from the second side wall sections 21, 22 toward the first side wall sections 16, 17. The oxidant flow channels 13A, 13B allow the oxidant OX from a supply pipe 31 to pass through so as to expand in the horizontal direction (direction parallel to the power generating unit arrangement surface where the power generating unit including the cell stacks 3 is disposed) and guides the oxidant to the oxidant flow channels 13C, 13D. The oxidant flow channels 13C, 13D allow the oxidant OX to pass through downward and heat the oxidant OX by the heat of the exhaust gas EG flowing in the exhaust gas flow channels 12C, 12D located on the inner side. The oxidant flow channels 13E, 13F allow the oxidant OX to pass through from the outside to the inside in the width direction D2 and guide the oxidant to through holes 47, 48 formed in the first side wall sections 16, 17.

The supply pipe 31 for allowing the oxidant to flow in from an oxidant supply section (not shown in the figure) to the oxidant flow channel 13 is provided in the second upper wall section 28. The exhaust pipe 32 for discharging the exhaust gas from the exhaust gas flow channel 12 is provided in the second bottom wall section 24.

The side wall sections 16, 17, 21, 22, 26, 27, upper wall sections 23, 28, and bottom wall sections 18, 24, 29 extend to end portions 6a, 6b of the housing 6 in the longitudinal direction D 1. End wall sections 33, 34 are provided at both end portions, in the longitudinal direction D1, of the housing 6. The third side wall sections 26, 27, second upper wall section 28, third bottom wall section 29, and end wall sections 33, 34 constitute the outer shell of the fuel cell module 1, sealing in the connection sections thereof is ensured, and air-tightness of the housing 6 is ensured.

The flows of the hydrogen-containing gas HG, oxidant OX, and exhaust gas EG will be explained below.

The hydrogen-containing gas HG generated in the reformer 2 by using the hydrogen-containing fuel supplied from the outside and the steam from the water vaporizing unit 4 flows into the base 7 through the pipe 8 and is supplied to the cells of the cell stacks 3 from the base 7. The hydrogen-containing gas HG flows from bottom to top in the cell stacks 3, and part thereof is used as off-gas for combustion in the combustion section 9. The oxidant OX is supplied from the outside through the supply pipe 31, expands in the horizontal direction (direction parallel to the power generating unit arrangement surface where the power generating unit including the cell stacks 3 is disposed) in the oxidant flow channels 13A, 13B, and passes downward in the oxidant flow channels 13C, 13D, while being heated by the exhaust gas EG flowing on the inside. The oxidant OX passes through the oxidant flow channel 13E, 13F and flows from the second side wall sections 21, 22 toward the first side wall sections 16, 17 from the outside to the inside. The oxidant OX passes through the through holes 47, 48, and is supplied to the cell stacks 3. Part of the oxidant is used for combustion in the combustion section 9. The exhaust gas EG generated in the combustion section 9 is guided by the exhaust gas flow channels 12A, 12B to the exhaust gas flow channels 12C, 12D and passes downward in the exhaust gas flow channels 12C, 12D, while supplying the heat to the oxidant OX flowing on the outer side. Where the exhaust gas EG reaches the bottom section, it flows into the exhaust gas flow channels 12E, 12F and passes through the exhaust gas flow channels 12E, 12F, while supplying the heat to the water vaporizing unit 4. The exhaust gas EG that has passed through the exhaust gas flow channels 12E, 12F is discharged from the exhaust pipe 32.

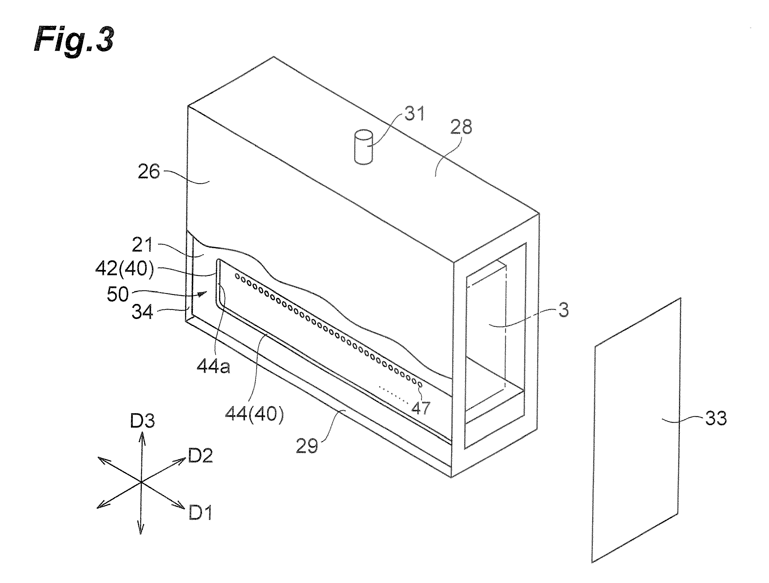

The fuel cell module 1 according to the present embodiment makes it possible to reduce cost due to a simple structure of the housing 6. Further, the fuel cell module 1 uses a structure in which heat can be efficiently exchanged between the exhaust gas EG and the water vaporizing unit 4. In order to demonstrate such an effect, the housing 6 includes flow channel forming sections 40, 41 that form the oxidant flow channels 13E, 13F extending from the second side wall sections 21, 22 to the first side wall sections 16, 17, through holes 47, 48 connecting the oxidant flow channels 13E, 13F with the accommodation chamber 11, an inlet section 50 where the exhaust gas EG is collected and allowed to flow into the exhaust gas flow channels 12E, 12F, and the exhaust pipe 32 for collecting and discharging the exhaust gas EG from the exhaust gas flow channels 12E, 12F. Fig. 3 is a perspective view of such a structure. The explanation below will be conducted with reference to Figs. 1, 2, and 3. Fig. 3 shows only the configuration on the side of the flow channel forming section 40, but a similar configuration is also present on the side of the flow channel forming section 41.

A plurality of through holes 47, 48 is formed along the longitudinal direction D1 so that the oxidant could be supplied to each cell in the cell stacks 3. The through holes 47, 48 are disposed so as to overlap the region on the lower side of the cell stacks 3, when viewed from the width direction D2 (see Fig. 2). To facilitate the explanation, the enlarged through holes 47, 48 are shown in the figure. The shape and arrangement pattern of the through holes 47, 48 may be changed, as appropriate, according to the type of the cell stacks 3.

In order to supply the oxidant to the cell stacks 3 through the through holes 47, 48, the flow channel forming sections 40, 41 have a function of forming the oxidant flow channels 13E, 13F so as to cross the exhaust gas flow channels 12C, 12D. And the flow channel forming sections 40, 41 have a function of forming the inlet section 50 that collects the exhaust gas EG by closing a region constituting part of the exhaust gas flow channels 12C, 12D. The flow channel forming sections 40, 41 are formed at positions corresponding at least to the through holes 47, 48 and formed such that the exhaust gas flow channels 12C, 12D are not closed in the entire range in the longitudinal direction D1. In the present embodiment, the flow channel forming sections 40, 41 are formed in a rectangular shape in the regions on the lower side of the first side wall sections 16, 17. The flow channel forming sections 40, 41 extend as far as one end portion 6a on the one end portion 6a side of the housing 6. On the other end portion 6b side, the flow channel forming sections are set apart from the other end portion 6b to ensure the inlet section 50.

The flow channel forming sections 40, 41 include openings 42, 43 formed in the second side wall sections 21, 22, and surrounding wall sections 44, 46 connecting the edges of the openings 42, 43 with the first side wall sections 16, 17 of the accommodation chamber 11. The openings 42, 43 are formed at positions facing at least the through holes 47, 48. In the present embodiment, the openings 42, 43 are formed in a rectangular shape in a region on the lower side of the first side wall sections 16, 17. Further, the openings 42, 43 extend as far as the one end portion 6a on the one end portion 6a side of the housing 6 and are set apart from the other end portion 6b on the other end portion 6b side. The surrounding wall sections 44, 46 extend substantially perpendicular from the edges of the openings 42, 43 toward the first side wall sections 16, 17. The surrounding wall sections 44, 46 are formed such as to surround the periphery of the through holes 47, 48. With such a configuration, part (portion surrounded by the surrounding wall sections 44, 46) of the side surfaces 16a, 17a of the first side wall sections 16, 17 on the periphery of the through holes 47, 48 is exposed from the second side wall sections 21, 22 on the outer side. The surrounding wall sections 44, 46 have a function of partitioning the exhaust gas flow channels 12C, 12D from the oxidant flow channels 13E, 13F formed so as to cross the exhaust gas flow channels 12C, 12D. Upper wall sections 44b, 46b of the surrounding wall sections 44, 46 inhibit the flow of the exhaust gas EG from top to bottom in the exhaust gas flow channels 12C, 12D, thereby guiding the exhaust gas to the inlet section 50.

The inlet section 50 is formed between the end wall section 34 of the other end portion 6b of the housing 6 and the end wall section 44a of the surrounding wall section 44. Thus, the inlet section 50 is disposed on the other end portion 6b side, in the longitudinal direction D1, of the heat-receiving element accommodation chamber 60. As a result, the inlet section 50 collects the exhaust gas EG on the other end portion 6b side of the housing 6 and allows the exhaust gas to flow into the exhaust gas flow channels 12E, 12F on the lower side. The exhaust pipe 32 is disposed close to the one end portion 6a of the housing 6. Thus, the exhaust pipe 32 is disposed on the one end portion 6a side, in the longitudinal direction D1, of the heat-receiving element accommodation chamber 60. The exhaust pipe 32 collects and discharges the exhaust gas EG that has flown from the other end portion 6b side through the exhaust gas flow channels 12E, 12F. The water vaporizing unit 4 is disposed inside the exhaust gas flow channels 12E, 12F so as to extend from the one end portion 6a toward the other end portion 6b. Since the exhaust pipe 32 is thus disposed on the one end portion 6a side in the exhaust gas flow channels 12E, 12F, and the inlet section 50 is thus disposed on the other end portion 6b side in the exhaust gas flow channels 12E, 12F, it is possible to ensure a sufficient distance through which the exhaust gas EG flows inside the exhaust gas flow channels 12E, 12F (that is, sufficient contact time for the exhaust gas EG and the water vaporizing unit 4). Therefore, the exhaust gas EG is discharged from the exhaust pipe 32 after performing sufficient heat exchange with the water vaporizing unit 4. A similar inlet section 50 is also formed on the exhaust gas flow channel 12D side (this configuration is not shown in Fig. 3).

The operation and effects of the fuel cell module 1 according to the present embodiment will be explained below.

First, the configuration of the fuel cell module described in Patent Literature 1 will be explained for comparison. In the housing of the fuel cell module, an oxidant is supplied to a cell stack by using an oxidant supply component. The oxidant supply component extends so as to enter a gap between a pair of cell stacks, includes an oxidant flow channel inside thereof, and includes a through hole in a distal end portion. Further, a gas supply pipe is formed in a bottom wall (corresponds to the third bottom wall section 29) and the space between the bottom wall (corresponds to the third bottom wall section 29) and another bottom wall (corresponds to the second bottom wall section 24) functions as an oxidant flow channel. The flow of the exhaust gas inside the exhaust gas flow channel on the side wall side is not inhibited, and the exhaust gas flow channel includes a large flow channel surface area.

Since the fuel cell module of the comparative example includes the oxidant supply component, an opening for inserting the oxidant supply components should be formed in the upper wall section (first upper wall section 23) disposed above the accommodation chamber. A plate component having the opening should be prepared separately from other wall sections and then should be assembled with the housing. Further, a flange plate or a sealing material is necessary to ensure air-tightness between such an opening and other wall sections or the oxidant supply component and for preventing the oxidant from being supplied from a zone outside the through hole in the distal end section which serves to supply the oxidant. Where the plate component having an opening is not accurately attached, it is possible that the oxidant would not be supplied to the designed position of the cell stack (for example, the position of the through hole of the oxidant supply component shifts and the oxidant cannot be supplied between the cells) when the oxidant supply component is assembled. Therefore, the oxidant supply component is required to be produced and also assembled with high accuracy and the assembling cost rises. Accordingly, a problem is associated with the increased production cost and material cost of the fuel cell module. Further, since the oxidant supply component should be inserted from the upper side of the cell stack, the reformer should be formed in an angular U-like shape such that the oxidant supply component could be inserted therein so that combustion heat could be obtained while bypassing the oxidant supply component. The problem associated with such a shape is that the reformer has a complex shape, the number of welding zones increases and the welding line length also increases.

In the fuel cell module 1 according to the present embodiment, the housing 6 includes the accommodation chamber 11 that accommodates cell stacks 3, and the oxidant flow channel 13 that is formed outside of the accommodation chamber 11 and allows the oxidant to pass therethrough. Further, the through holes 47, 48 that connect the accommodation chamber 11 with the oxidant flow channel 13 and supply the oxidant to the cell stacks 3 are formed in the first side wall sections 16, 17 constituting the accommodation chamber 11. Since the oxidant flow channel 13 is disposed outside of the accommodation chamber 11, the configuration is obtained such that when the oxidant OX is supplied to the cell stacks 3, the oxidant OX flows from the outside inward of the housing 6. As a result, the oxidant supply component 36 that is inserted in the gap between a pair of cell stacks 3 in the conventional fuel cell module is not required. Therefore, the opening for inserting the oxidant supply component 36 is not required in the first upper wall section 23 that is disposed above the accommodation chamber 11, and no parts or operations are needed to ensure air-tightness. Thus, the number of parts can be decreased and the cost can be reduced. Further, since the operations for inserting the oxidant supply component 36 and ensuring the air-tightness are not required, the cost can be reduced. In addition, the reformer 2 disposed above the cell stacks 3 is not required to have a structure such that the oxidant supply component 36 could be bypassed, the structure of the reformer can be simplified, and cost thereof can be reduced. In the present embodiment, the reformer 2 has a simple shape of a rectangular parallelepiped. It follows from the above that the structure of the fuel cell module 1 can be simplified and the cost thereof can be reduced.

Further, in the fuel cell module 1, the housing 6 includes the second side wall sections 21, 22 that form the exhaust gas flow channels 12C, 12D between the first side wall sections 16, 17, the third side wall sections 26, 27 that form the oxidant flow channels 13C, 13D between the second side wall sections 21, 22, and the flow channel forming sections 40, 41 that form the oxidant flow channels 13E, 13F. The exhaust gas flow channels 12C, 12D are formed between the first side wall sections 16, 17 and the second side wall sections 21, 22, and the oxidant flow channels 13C, 13D are formed between the second side wall sections 21, 22 and the third side wall sections 26, 27. As a result, heat exchange can be performed between the exhaust gas EG and the oxidant OX. The flow channel forming sections 40, 41 are configured by forming the openings 42, 43 in the second side wall sections 21, 22, which partition the oxidant flow channels 13C, 13D from the exhaust gas flow channels 12C, 12D, and forming the surrounding wall sections 44, 46 connecting the openings 42, 43 with the first side wall sections 16, 17 so as to surround the through holes 47, 48. As a result, it is possible to form the oxidant flow channels 13E, 13F that cross the interior of the exhaust gas flow channels 12C, 12D from the second side wall sections 21, 22 toward the through holes 47, 48 of the first side wall sections 16, 17. As a result, the oxidant OX that has exchanged heat with the exhaust gas EG when passing through inside the oxidant flow channels 13C, 13D formed between the second side wall sections 21, 22 and the third side wall sections 26, 27 can be supplied to the cell stacks 3 via the through holes 47, 48.

The through holes 47, 48 are formed on both sides of the cell stacks 3, with the cell stacks 3 being interposed therebetween. As a result, the oxidant can be supplied from both sides of the cell stacks 3.

In the fuel cell module described in Patent Literature 1, the exhaust gas flow channel on the side wall side includes a large flow channel surface area. As a result, the exhaust gas flows toward the exhaust pipe in a path such that becomes as short as possible. Therefore, the exhaust gas flowing in the exhaust flow channel on the side wall side flows close to the exhaust pipe on the bottom wall side and flows into the exhaust gas flow channel on the bottom wall side at a position close to the exhaust pipe. The exhaust gas flowing into the exhaust gas flow channel on the bottom wall side is immediately discharged from the exhaust pipe. Therefore, the distance through which the exhaust gas flows in the exhaust gas flow channel on the bottom wall side, that is, the contact time of the exhaust gas and the water vaporizing unit is reduced and the heat exchange cannot be efficiently performed between the exhaust gas and the water vaporizing unit.

In the fuel cell module 1 according to the present embodiment, the exhaust gas flow channel 12 includes the inlet section 50 that collects the exhaust gas EG and allows the exhaust gas to flow into the exhaust gas flow channels 12E, 12F, and the exhaust pipe 32 that collects the exhaust gas EG and discharges the exhaust gas from the exhaust gas flow channels 12E, 12F. With such a configuration, even when the flow channel surface area of the exhaust gas flow channels 12C, 12D is large, the exhaust gas EG passing through the exhaust gas flow channels 12C, 12D flows to the exhaust gas flow channels 12E, 12F after being collected in the inlet section 50 and flows inside the exhaust gas flow channels 12E, 12F so as to pass at least between the inlet section 50 and the exhaust pipe 32. Therefore, the time of contact of the exhaust gas EG with the water vaporizing unit 4 can be extended by enlarging the distance between the inlet section 50 and the exhaust pipe 32. As a result, the efficiency of heat exchange between the exhaust gas EG and the water vaporizing unit 4 can be increased and the heat of the exhaust gas EG can be effectively used.

Further, the exhaust pipe 32 is disposed on the one end portion 6a side in the heat-receiving element accommodation chamber 60, and the inlet section 50 is disposed on the other end portion 6b side of the heat- receiving element accommodation chamber 60. With such a configuration, the distance between the inlet section 50 and the exhaust pipe 32, that is, the time of contact between the exhaust gas EG and the water vaporizing unit 4, can be increased.

Further, the housing 6 includes the upper wall sections 44b, 46b formed inside the exhaust gas flow channels 12C, 12D and extending from the second side wall sections 21, 22 toward the first side wall sections 16, 17. As a result of part of the exhaust gas flow channels 12C, 12D being closed by the upper wall sections 44b, 46b, the exhaust gas EG flowing in the exhaust gas flow channels 12C, 12D is blocked by the upper wall sections 44b, 46b and flows toward the portion that is not closed. Thus, a region between the end wall section 34 and the end wall section 44b, which is a portion that is not closed, is configured as the inlet section 50 where the exhaust gas EG is collected. As a result, the inlet section 50 can be formed by a simple configuration.

Further, because of such a configuration, the end wall sections 44a, 46a of the flow channel forming sections 40, 41 constitute the inlet section 50 when the exhaust gas is collected, and the upper wall sections 44b, 46b constitute a wall section that blocks the exhaust gas flow and guides the exhaust gas to the inlet section 50. Thus, the flow channel forming sections 40, 41 for guiding the oxidant OX to the through holes 47, 48 can function both as portions that close part of the exhaust gas flow channels 12C, 12D and guide the exhaust gas to the inlet section 50.

The present invention is not limited to the above-described embodiments.

For example, in the above-described embodiment, two cell stacks 3 are arranged side by side on the base 7, but only one cell stack 3 may be arranged. Thus, the oxidant OX may be supplied to the one cell stack 3 from both through holes 47, 48. Thus, a configuration may be used in which the through holes 47, 48 are provided with left-right symmetry on both sides of the cell stack 3 so that the one cell stack 3 is interposed therebetween, and the oxidant is supplied from both sides to the one cell stack 3. Further, in the above-described embodiment, the structure is used in which the oxidant OX can be supplied from both through holes 47, 48, but the oxidant may be also supplied only from one of the through holes 47, 48. For example, one cell stack 3 may be used and the oxidant OX may be supplied to the one cell stack 3 from only one direction. In this case, the flow channel forming sections 40, 41 may be used, but the through hole 48 (or the through hole 47) may be omitted. Further, other flow channels or wall sections can also have a structure that is not symmetrical in the left-right direction (as viewed from the longitudinal direction D1). Further, the configuration of flow channels or the configuration of wall sections in the housing may be changed, as appropriate, according to the fuel cell module, provided that the oxidant can be supplied to the cell stacks 3 from the external oxidant flow channel through the through holes.

Further, in the above-described embodiment, the configuration is used in which the oxidant flow channels 13E, 13F are formed in the flow channel forming sections 40, 41, but such a configuration is not limiting, provided that the accommodation chamber 11 and the oxidant flow channel on the outside of the accommodation chamber 11 can connect with each other and the oxidant OX can be supplied to the cell stacks 3. For example, a pipe may be passed through the first side wall sections 16, 17 and the second side wall sections 21, 22 to connect the oxidant flow channels 13C, 13D with the accommodation chamber 11. Further, the dimensions, shape, and positions of the flow channel forming sections may be changed.

Further, in the above-described embodiment, the water vaporizing unit 4 is disposed in the exhaust gas flow channel below the cell stacks 3, but the position of the water vaporizing unit 4 is not particularly limited. For example, a configuration in which the water vaporizing unit is integrated with the reformer may be also used.

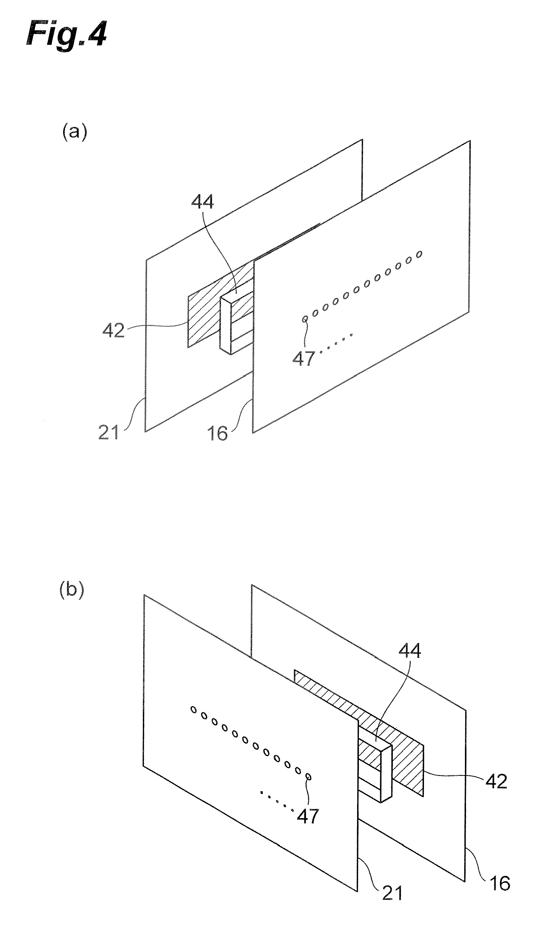

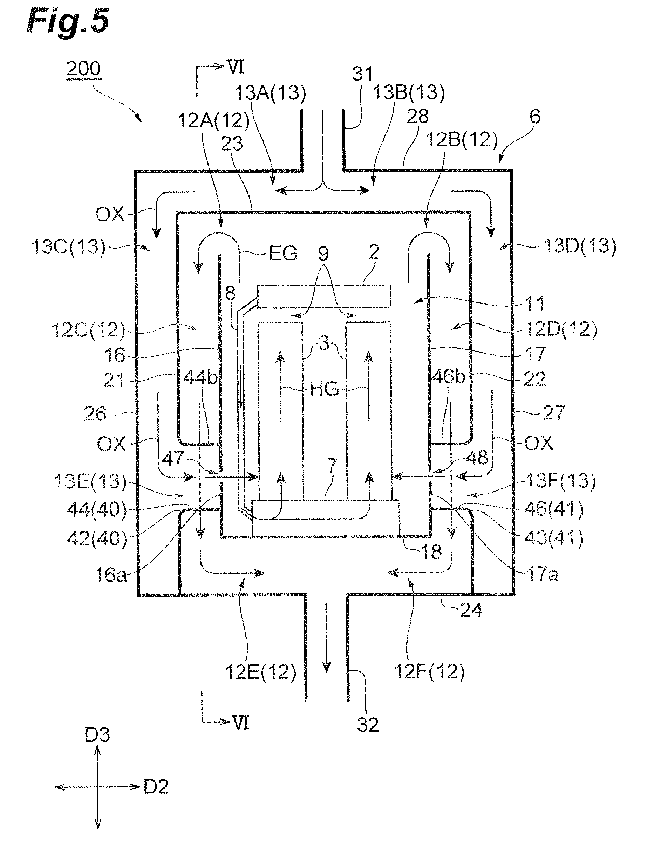

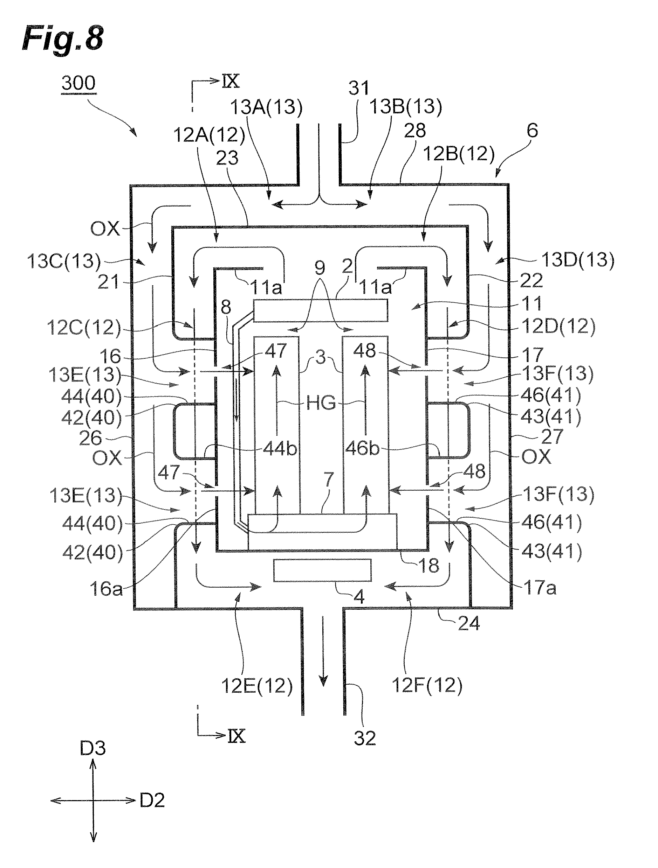

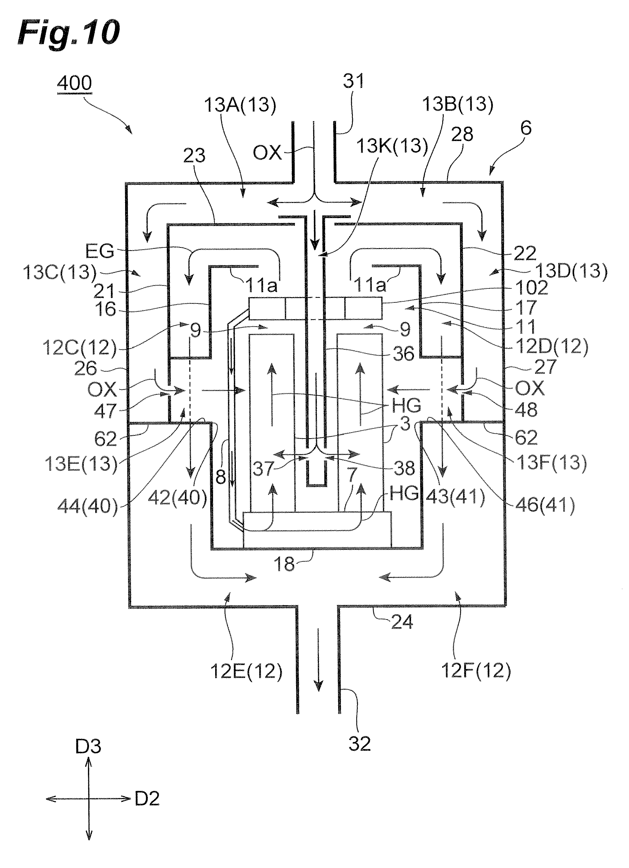

Further, as shown in Fig. 4, the through hole 47 may be formed in the first side wall section 16 or may be formed in the second side wall section 21. More specifically, the configuration shown in Fig. 4(a) is similar to that shown in Fig. 1, and the through hole 47 is formed in the first side wall section 16. The opening 42 is formed at a position facing the through hole 47 in the second side wall section 21. The surrounding wall section 44 partitioning the exhaust gas flow channel from the oxidant flow channel connects the edge of the opening 42 with the first side wall section 16 so as to surround the periphery of the through hole 47. The configuration shown in Fig. 4(a) may be applied to the configuration shown in the below-described Fig. 10. Meanwhile, in the configuration shown in Fig. 4(b), the through hole 47 is formed in the second side wall section 21. The opening 42 is formed at a position facing the through hole 47 in the first side wall section 16. The surrounding wall section 44 partitioning the exhaust gas flow channel from the oxidant flow channel connects the edge of the opening 42 with the second side wall section 21 so as to surround the periphery of the through hole 47. The configuration shown in Fig. 4(b) may be applied to the configuration shown in Fig. 1 and the configuration shown in the below-described Figs. 5 and 8.

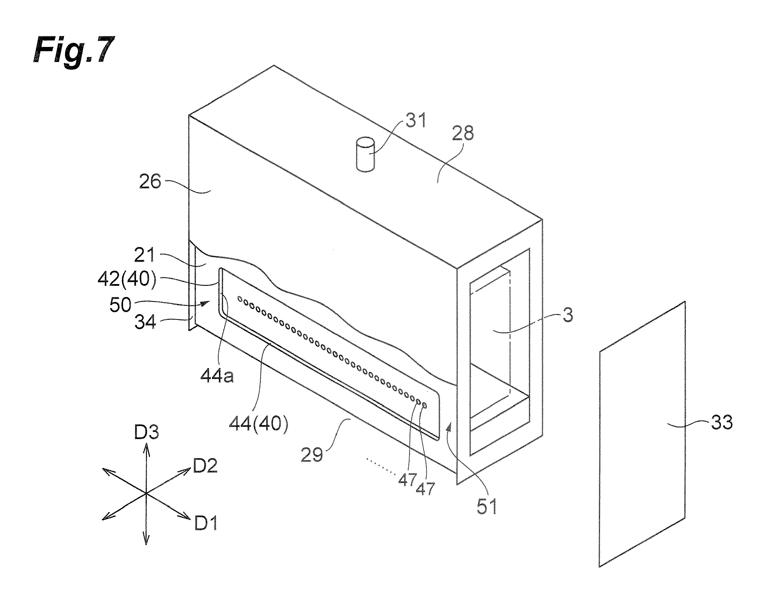

The configuration relating to a fuel cell module 200 such as shown in Figs. 5 to 7 may be also used. In the fuel cell module 200 shown in Figs. 5 to 7, the third bottom wall section 29 is omitted and the second bottom wall section is configured as the lowermost surface. Further, in the fuel cell module 200, the water vaporizing unit 4 is not disposed in the exhaust gas flow channels 12E, 12F. In the embodiment shown in Fig. 1, one inlet section collecting the exhaust gas EG is used, but in the fuel cell module 200 shown in Figs. 5 to 7, an inlet section 51 is also formed on the one end portion 6a side by setting the flow channel forming sections 40, 41 also apart from the one end portion 6a. The position of the exhaust pipe 32 is set to a substantially central position in the longitudinal direction D1, but since the water vaporizer 4 is not disposed and the heat exchange efficiency is not required to be taken into account, the position of the exhaust pipe 32 can be determined at random. Further, in the configuration such as shown in Figs. 5 to 7, all of the through holes and one opening are connected so as to surround the surrounding wall section, and one flow channel forming section is provided, but a plurality of flow channel forming sections may be also provided by providing a plurality of through holes and a plurality of openings at the same height and connecting them so as to surround a plurality of surrounding wall sections. In this case, the space between the surrounding wall section and other surrounding wall section becomes an inlet section for the exhaust gas EG. In particular, in the configuration in which the water vaporizer 4 is not provided in the exhaust gas flow channels 12E, 12F, the heat exchange efficiency is not required to be taken into account and, therefore, the flow of the exhaust gas EG flowing in the exhaust gas flow channel 12 can be made almost uniform and the heat exchange with the oxidant flowing in the oxidant flow channel 13 can be enhanced by performing the connection by the plurality of the surrounding wall sections in the above-described manner.

In the embodiment shown in Figs. 5 to 7, the oxidant is introduced from above through the supply pipe 31. However, the oxidant may be also supplied from below by covering the housing 6 shown in Figs. 5 to 7 with one more housing and providing the supply pipe in the lower section of this outer housing.

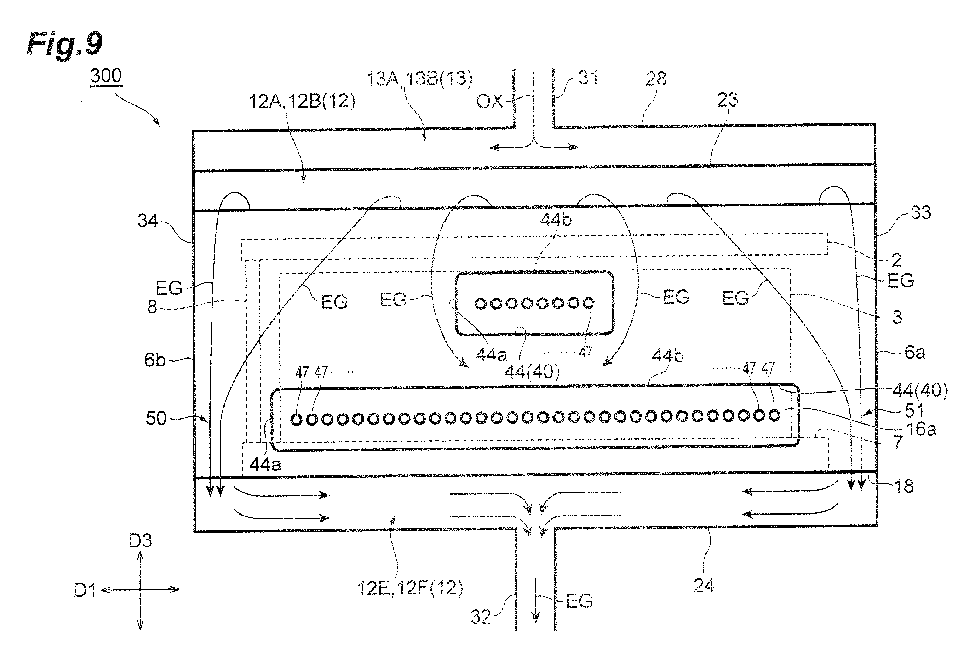

A configuration relating to a fuel cell module 300 such as shown in Figs. 8 and 9 may be also used. The fuel cell module 300 is obtained from the fuel cell module 200 shown in Figs. 5 to 7 by further forming flow channel forming sections 40, 41 at a position higher than the flow channel forming sections 40, 41. The upper flow channel forming sections 40, 41 are also provided, similarly to the lower flow channel forming sections 40, 41, with the openings 42, 43, surrounding wall sections 44, 46, and through holes 47, 48. As a result of supplying the oxidant from below by the through holes 47, 48 of the lower flow channel forming sections 40, 41, the oxidant can be supplied to all of the cells. Meanwhile, as a result of supplying the oxidant from positions other than the lower region, such as the through holes 47, 48 of the upper flow channel forming sections 40, 41, local heat generation in the cells can be inhibited and the temperature of all of the cells can be advantageously maintained. Therefore, the service life of the power generating unit can be greatly extended by determining the positions of the through holes 47, 48 and the diameter of the through holes 47, 48 according to the heat generation distribution in the cells. Thus, the adjustment of the oxidant supply position such as to obtain the advantageous cell temperature can be performed with a high degree of freedom. By using the configuration in which the oxidant is supplied using the flow channel forming sections 40, 41 and the through holes 47, 48, it is possible to adjust the oxidant supply position with a high degree of freedom, without an excess increase in the number of welding zones and cost. Thus, with the present embodiment, the cost can be easily reduced.

In the fuel cell module 300, bent sections 11a extending inward from the upper end portions of the accommodation chamber 11 are formed. Thus, the upper end portions of the accommodation chamber 11 may be bent. The bent sections 11a shown in Fig. 8 are bent above the reformer 2, but they may be also bent below the reformer 2. The bent sections 11 a may be also omitted as shown in Figs. 1 and 5.

A configuration relating to a fuel cell module 400 such as shown in Fig. 10 may be also used. In the fuel cell module 400, the oxidant OX is supplied to the cell stacks 3 not only from both outer sides, but also by using the oxidant supply component 36. The oxidant supply component 36 is inserted from the first upper wall section 23, extends so as to enter the gap between a pair of cell stacks 3, includes an oxidant flow channel 13K inside thereof, and includes through holes 37, 38 in the distal end portion. A reformer 102 is shaped in an angular U-like shape such that the oxidant supply component 36 can be inserted therein. The through holes 37, 38 of the oxidant supply component 36 serve to supply the oxidant from the lower regions of the cell stacks 3. The flow channel forming sections 40, 41 that form the oxidant flow channels 13E, 13F and the through holes 47, 48 are formed at positions higher than those of the through holes 37, 38 of the oxidant supply component 36, and the oxidant can be supplied to the upper regions of the cell stacks 3. The through holes 47, 48 are formed in the second side wall sections 21, 22, and the openings 42, 43 are formed in the first side wall sections 16, 17. As a result of supplying the oxidant from below from the through holes 37, 38 of the oxidant supply component 36, the oxidant can be supplied to all of the cells. Meanwhile, as a result of supplying the oxidant from positions other than the lower region, such as the through holes 47, 48 of the upper flow channel forming sections 40, 41, the cells can be effectively cooled. Therefore, the positions of the through holes can be determined according to the heat generation distribution in the cells. Thus, the adjustment of the oxidant supply position such as to obtain the advantageous cell temperature can be performed with a high degree of freedom. By using the configuration in which the oxidant is supplied using the flow channel forming sections 40, 41 and the through holes 47, 48, it is possible to adjust the oxidant supply position with a high degree of freedom, without an excess increase in the number of welding zones and cost. Thus, with the present embodiment, the cost can be easily reduced.

The oxidant is supplied from the lower region from the through holes 37, 38 of the oxidant supply component 36, and the oxidant is supplied from the position on the upper side other than the lower region from the through holes 47, 48. In an alternative configuration, the positions of the through holes 37, 38 of the oxidant supply component 36 may be set on the upper side (height positions of the through holes 47, 48 in Fig. 10) and the positions of the through holes 47, 48 may be set on the lower side (height positions of the through holes 37, 38 in Fig. 10).

In the fuel cell module 400, the bent sections 11a extending inward from the upper end portions of the accommodation chamber 11 are formed. The upper end portions of the accommodation chamber 11 are thus bent. The bent sections 11a in Fig. 10 are provided above the reformer 2, but they may be also provided below the reformer 2. Further, the bent sections 11a may be also omitted, as shown in Figs. 1 and 5. The lower sides of the surrounding wall sections 44, 46 have extending sections 62 and abut against the third side wall sections 26, 27. Such a configuration including the extending sections 62 may be also used in the fuel cell module 200 shown in Figs. 5 to 7.

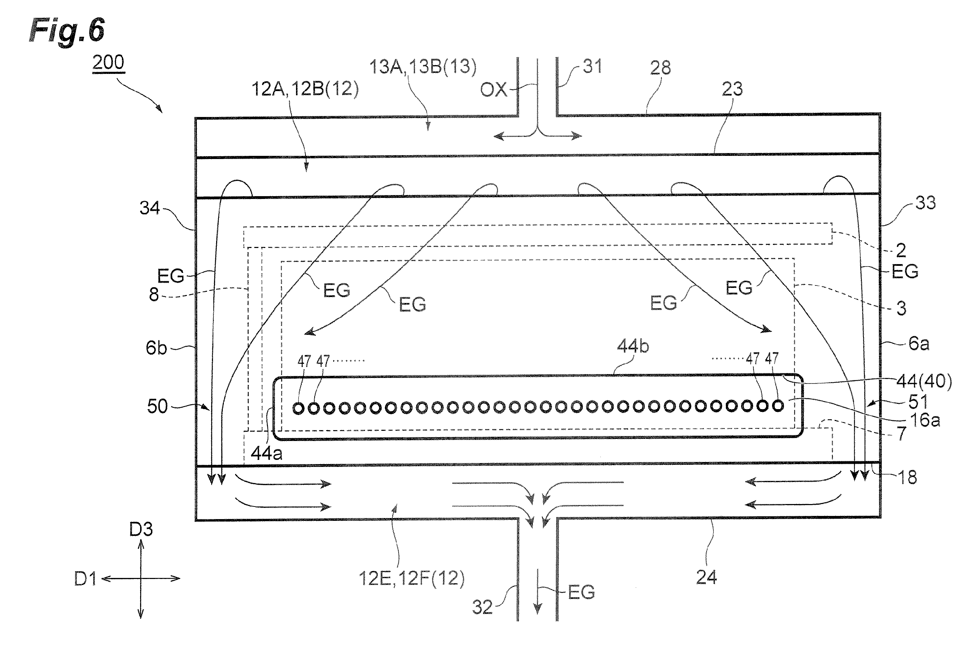

The flow channel forming sections shown in Figs. 1 to 10 described hereinabove should not necessarily be continuous and may be divided into a plurality of zones at positions at the same height. For example, the flow channel forming section 40 shown in Fig. 6 may be divided into a plurality of regions in the longitudinal direction D1. The through holes 47, 48 should not necessarily be arranged linearly or equidistantly, and may be formed in any pattern, with any spacing, and of any shape.

In accordance with the present invention, the reformer and water vaporizing unit are not the mandatory structural components and may be omitted as appropriate.

### Reference Signs List

1, 200, 300, 400... fuel cell modules, 2... reformer, 3... cell stack, 4... water vaporizing unit, 6... housing, 11... accommodation chamber, 12... exhaust gas flow channel, 13... oxidant flow channel, 16, 17... first side wall section, 21, 22... second side wall section, 26, 27... third side wall sections, 32... exhaust pipe, 40, 41... flow channel forming sections, 42, 43... openings, 44, 46... surrounding wall sections, 44b, 46b... upper wall sections, 50.., inlet section

## Claims

1. A fuel cell module comprising:
a power generating unit including a cell stack having connected therein a plurality of cells that generate power by using a hydrogen-containing gas and an oxidant; and
a housing accommodating the power generating unit, wherein
the housing includes:
an accommodation chamber having a power generating unit arrangement surface where the power generating unit is disposed and a first side wall section and accommodating the power generating unit; and
an oxidant flow channel that is formed on the outside of the accommodation chamber, with the first side wall section being interposed therebetween, and allows the oxidant to pass therethrough, and
a through hole is formed that connects the accommodation chamber with the oxidant flow channel and serves to supply the oxidant to the cell stack.

2. The fuel cell module according to claim 1, wherein the first side wall section is positioned parallel to a connection direction of the cells and so as not to face the power generating unit arrangement surface and is provided as a pair of sections, with the power generating unit being interposed therebetween.

3. The fuel cell module according to claim 1 or 2, wherein the housing includes:
an exhaust gas flow channel that is formed between the accommodation chamber and the oxidant flow channel and allows to pass therethrough an exhaust gas created by combustion of an off-gas from the cell stack;
a pair of second side wall sections that are disposed on the outside of a pair of the first side wall sections and form the exhaust gas flow channel between the pair of the first side wall sections and the pair of the second side wall sections;
a pair of third side wall sections that are disposed on the outside of the pair of the second side wall sections and form the oxidant flow channel between the pair of the second side wall sections and the pair of the third side wall sections; and
a flow channel forming section that forms the oxidant flow channel extending from the second side wall section toward the first side wall section inside the exhaust gas flow channel,
at least one of the pair of the first side wall sections is provided with the through hole, and
the flow channel forming section includes:
an opening provided at a position facing at least the through hole in the pair of the second side wall sections; and
a surrounding wall section that connects an edge of the opening with the first side wall section, so as to surround the periphery of the through hole, and partition the exhaust gas flow channel from the oxidant flow channel.

4. The fuel cell module according to claim 1 or 2, wherein the housing includes:
an exhaust gas flow channel that is formed between the accommodation chamber and the oxidant flow channel and allows to pass therethrough an exhaust gas created by combustion of an off-gas from the cell stack;
a pair of second side wall sections that are disposed on the outside of a pair of the first side wall sections and form the exhaust gas flow channel between the pair of the first side wall sections and the pair of the second side wall sections;
a pair of third side wall sections that are disposed on the outside of the pair of the second side wall sections and form the oxidant flow channel between the pair of the second side wall sections and the pair of the third side wall sections; and
a flow channel forming section that forms the oxidant flow channel extending from the first side wall section toward the second side wall section inside the exhaust gas flow channel,
at least one of the pair of the second side wall sections is provided with the through hole, and
the flow channel forming section includes:
an opening provided at a position facing at least the through hole in the pair of the first side wall sections, and
a surrounding wall section that connects an edge of the opening with the second side wall section, so as to surround the periphery of the through hole, and partition the exhaust gas flow channel from the oxidant flow channel.

5. The fuel cell module according to any one of claims 1 to 4, wherein
the power generating unit includes at least two of the cell stacks that are disposed in a direction parallel to the power generating unit arrangement surface and perpendicular to a connection direction of the cells, and
an oxidant supply component that supplies the oxidant to the cell stacks is disposed in a gap between the at least two cell stacks.
